# EUROPÄISCHE PATENTSCHRIFT

(11) **EP 3 144 558 B1**
(45) Veröffentlichungstag und Bekanntmachung des Hinweises auf die Patenterteilung: **02.01.2019**
(21) Anmeldenummer: 16187541.4
(22) Anmeldetag: 07.09.2016
(51) Int. Cl.: F16F 7/02

(54) **DÄMPFUNGSEINRICHTUNG**
DAMPENING DEVICE
DISPOSITIF D'AMORTISSEMENT

(30) Priorität: 10.09.2015 DE 102015115218
(43) Veröffentlichungstag der Anmeldung: 22.03.2017
(73) Patentinhaber: Dr. Schneider Kunststoffwerke GmbH, 96317 Kronach (DE)
(72) Erfinder: Schneider, Johannes, 96328 Küps (DE)

(56) Entgegenhaltungen:
- GB-A- 2 328 183
- JP-A- H0 389 039
- JP-A- 2015 132 375
- US-A- 2 135 281
- US-A- 3 710 424

## Beschreibung

Es wird eine Dämpfungseinrichtung mit einem Lagerelement und einem relativ zu dem Lagerelement bewegbaren Dämpfungsglied beschrieben, wobei das Dämpfungsglied in einer ersten Bewegungsrichtung stärker gedämpft wird als in einer zweiten Bewegungsrichtung.

Solche Dämpfungseinrichtungen kommen in verschiedenen Gebieten zum Einsatz. Beispielsweise werden solche Dämpfungseinrichtungen als Lineardämpfer bei zueinander beweglichen Bauteilen verwendet. Die Bauteile können zueinander verschiebbar oder verschwenkbar gelagert sein. Dabei weisen die Dämpfungseinrichtungen einen Freilauf auf, wobei über den Freilauf sichergestellt wird, dass die Dämpfung in einer Richtung stärker ausgeprägt ist als in einer entgegengesetzten Richtung. Verwendung finden solche Lineardämpfer beispielsweise in Kraftfahrzeugen oder bei Möbeln.

Beispielsweise werden Bewegungsdämpfer oder Lineardämpfer mit einer Dämpfungseinrichtung dazu verwendet, um das Öffnen eines Handschuhfaches schwergängiger zu gestalten als das Schließen. Aus dem Stand der Technik sind solche Bewegungsdämpfer mit einer Dämpfungseinrichtung auch bei anderen schwenkbar oder verlagerbaren Komponenten, wie beispielsweise verschwenkbaren Klapptischen oder ausziehbaren Schiebetischen, bekannt.

In der Regel bestehen Lineardämpfer mit einem Freilauf, wobei in einer Bewegungsrichtung ein erstes Bremsmoment und in der entgegengesetzten Bewegungsrichtung ein zweites Bremsmoment erzeugt wird, aus einer Kolbenanordnung, wobei in einer ersten Bewegungsrichtung ein Fluid (Gas oder Öl) komprimiert oder durch eine Öffnung gedrückt wird und in einer entgegengesetzten Richtung das Fluid sich entspannen oder leichter zurückströmen kann. Ein solcher Bewegungsdämpfer ist beispielsweise in DE 20 2011 102 704 U1 offenbart.

Aus DE 10 2008 027 623 A1 ist ferner eine Dämpfungsvorrichtung mit einem Drehdämpfer bekannt. Der Drehdämpfer weist ein Ritzel auf, das mit einer Zahnstange zusammenwirkt, um eine translatorische Bewegung eines Bauteils relativ zu einem stationären Lagerbauteil zu dämpfen. In DE 10 2008 027 623 A1 wird vorgeschlagen, dass mindestens zwei Drehdämpfer vorgesehen sind, deren Ritzel mit einer Zahnung einer Zahnstange zusammenwirken, wobei die Drehdämpfer entweder in Reihe oder parallel angeordnet sind und mindestens ein Drehdämpfer als Einwegdämpfer ausgebildet ist. Die Drehdämpfer sind so bemessen, dass sie in der einen Bewegungsrichtung ein erstes Bremsmoment erzeugen und in der entgegengesetzten Richtung ein zweites Bremsmoment.

US 2,135,281 A offenbart eine Dämpfungseinrichtung für Fahrzeuge, welche eine Fahrzeugachse und einen elastischen Gurt aufweist, der um die Fahrzeugachse gewickelt ist. An einem Ende ist der Gurt über eine Zugfeder am Fahrzeuggehäuse befestigt. An dem entgegengesetzten Ende ist der flexible Gurt fest mit dem Fahrzeuggehäuse verbunden, wobei eine zweite Zugfeder vorgesehen ist, welche den Gurt unter Spannung hält.

US 3,710,424 A offenbart eine Bremseinrichtung für ein an einem Ende federnd eingespanntes, stoßartig belastbares, biegsames Verbindungsmittel in der Form eines Seiles, wobei das Seil über eine feststehende Trommel unter Reibung gleitbar geführt ist, und für die federnde Einspannung des Seils zwei hintereinander geschaltete Federn mit verschiedenen Federkonstanten vorgesehen sind, wobei die eine Feder mit der kleineren Federkonstante der Vorspannung des Seils dient und die andere Feder mit der größeren Federkonstante vorgespannt und zur Aufnahme eines Teiles der stoßartigen Belastung bestimmt ist.

JP H03 89039 A offenbart eine Dämpfungseinrichtung mit zwei Seilen, die um eine gemeinsame Achse gewickelt sind. Die Seile sind mit einem ersten Element und die Achse ist mit einem zweiten Element verbunden, so dass bei einer Verlagerung des ersten Elements relativ zu dem zweiten Element die Haftreibung zwischen der Oberfläche der Welle und den Seilen die Verlagerung dämpft.

JP 2015 132375 A offenbart eine Dämpfungseinrichtung mit einem entlang einer Führungsanordnung bewegbaren Schlitten, wobei entlang der Führungsanordnung ein Band gespannt ist, welches durch den Schlitten verläuft. In dem Schlitten sind verdrehbar gelagerte Scheiben mit schlitzförmigen Öffnungen angeordnet. Durch die Öffnungen ist das Band geführt. Das Band verändert seine Ausrichtung entlang der Führungsanordnung, so dass bei einer Verlagerung des Schlittens die Scheiben entsprechend der Ausrichtung des Bandes gedreht werden.

GB 2 328 183 A offenbart ein Handschuhfach mit einem verschwenkbaren Deckel. An einem vorderen Abschnitt des Deckels sind Seile angeordnet, die mit Wänden des Handschuhfachs verbunden sind. In dem Deckel ist zudem eine Federeinrichtung vorgesehen. Die Federeinrichtung weist eine Drehfeder und eine Rolle auf. Die Seile sind so mit der Rolle befestigt, dass beim Öffnen des Deckels die Seile von der Rolle abgewickelt und die Drehfeder gespannt werden, wobei beim Schließen des Deckels die Seile wieder aufgewickelt werden. Zum Dämpfen der Bewegung beim Schließen des Deckels ist eine Getriebeanordnung vorgesehen, mit welcher die Rolle gekoppelt ist.

Die aus dem Stand der Technik bekannten Dämpfungsvorrichtungen weisen jedoch verschiedene Nachteile auf. So kann beispielsweise kein Verschieben zweier zueinander beweglicher Komponenten mit gleichbleibenden Dämpfungen in den jeweiligen Bewegungsrichtungen über einen langen Benutzungszeitraum erreicht werden, da das Fluid seine Viskosität vor allem über einen langen Benutzungszeitraum bei unterschiedlichen Temperaturen nicht beibehält. Ein weiterer entscheidender Nachteil ist, dass die Dämpfungseinrichtungen aus dem Stand der Technik auch nur in einem bestimmten Temperaturbereich betrieben werden können. Insbesondere tritt der Effekt auf, dass bei einer Temperaturänderung die Verlagerung zweier zueinander beweglicher Bauteile entweder viel einfacher oder viel schwergängiger erfolgt. Ein weiterer Nachteil besteht darin, dass aufgrund der Ausbildung der Dämpfungseinrichtungen mit Fluiden und Kolbenanordnungen bzw. drehbar gelagerten Fluid-Drehdämpfern der Aufbau aufwendig und damit nicht kostengünstig ist.

Es ist daher Aufgabe eine Dämpfungseinrichtung anzugeben, die einen ruhigen Lauf über einen weiten Temperaturbereich bereitstellt, temperaturunabhängig eine im Wesentlichen gleichbleibende Dämpfung bereitstellt, einfach aufgebaut ist und kostengünstig hergestellt werden kann.

Die Aufgabe wird durch eine Dämpfungseinrichtung mit den in Anspruch 1 angegebenen technischen Merkmalen gelöst. Vorteilhafte Weiterbildungen sind in den Unteransprüchen im Detail angegeben.

Bei einer die vorstehend genannte Aufgabe lösenden Dämpfungseinrichtung mit einem Lagerelement und einem relativ zu dem Lagerelement bewegbaren Dämpfungsglied, wobei das Dämpfungsglied in einer ersten Bewegungsrichtung stärker gedämpft wird als in einer zweiten Bewegungsrichtung, weist das Lagerelement ein flexibles Element auf, dass zwischen einem ersten Endabschnitt und einem zweiten Endabschnitt geführt ist. Der Be-Bereich zwischen dem ersten Endabschnitt und dem zweiten Endabschnitt definiert den Bewegungsweg des Dämpfungsglieds. Das Dämpfungsglied weist mindestens eine Welle auf und das flexible Element ist mindestens einmal um die Welle herumgeführt. Dabei ist das flexible Element über eine erste Federeinrichtung an einem der Endabschnitte vorgespannt. Das Lagerelement weist zudem eine sich entlang des Lagerelements erstreckende Führungsanordnung auf, entlang welcher das Dämpfungsglied bewegbar ist.

Bei einer solchen Dämpfungseinrichtung besteht eine Haftreibung zwischen dem flexiblen Element und der Oberfläche der Welle. Das Dämpfungsglied kann daher nur bewegt werden, wenn die Kraft zum Bewegen bzw. zum Verschieben größer als die Haftreibung zwischen dem flexiblen Element und der Welle ist. Das Dämpfungsglied kann in der ersten Bewegungsrichtung nur dann verlagert werden, wenn die Haftreibung zwischen der Welle und dem flexiblen Element überwunden wird. Wird das Dämpfungsglied in der zweiten Bewegungsrichtung zurück in eine Ausgangsposition verlagert, wird die erste Federeinrichtung, beispielsweise eine Druckfeder, komprimiert, wodurch sich die Spannung des flexiblen Elements reduziert und damit die Haftreibung zwischen der Welle und dem flexiblen Element geringer wird. Dadurch kann das Dämpfungsglied in der zweiten Bewegungsrichtung mit einem geringeren Kraftaufwand verlagert werden als in der ersten Bewegungsrichtung. Daraus resultiert eine geringere Dämpfung in der zweiten Bewegungsrichtung. Die Ausbildung der ersten Federeinrichtung gibt dadurch vor, in welchem Maß das flexible Element zwischen dem ersten Endabschnitt und dem zweiten Endabschnitt gespannt ist und wie stark die Haftreibung zwischen dem flexiblen Element und der Welle reduziert wird, wenn das Dämpfungsglied in der zweiten Bewegungsrichtung verlagert wird.

Eine derartige Dämpfungseinrichtung weist einen sehr einfachen Aufbau auf und ist daher kostengünstig und schnell herzustellen. Zudem erfolgt der Betrieb der Dämpfungseinrichtung temperaturunabhängig. Es ergeben sich hierbei keine Veränderungen der erforderlichen Bedienkräfte beim Verschieben über einen langen Zeitraum, wie zum Beispiel im Stand der Technik durch eine Änderung der Viskosität eines Fluids in einem Kolben.

Die erste Federeinrichtung ist vorzugsweise eine Druckfeder, die an dem Endabschnitt angeordnet ist, welcher sich beim Verschieben oder Verlagern des Dämpfungsglieds in der ersten Bewegungsrichtung an einer Endposition des Bewegungswegs befindet. Die Druckfeder ist dabei außerhalb des Bewegungswegs angeordnet. Das flexible Element ist an dem gegenüberliegenden Endabschnitt fest mit dem Endabschnitt verbunden und über den Endabschnitt an der Endposition beim Verschieben in der ersten Bewegungsrichtung hinausgeführt. Das flexible Element ist dabei in diesem Endabschnitt nicht fest befestigt, sondern über diesen Endabschnitt hinaus beispielsweise an einem Federteller angeordnet. Zwischen einem Endabschnitt und dem Federteller befindet sich die Druckfeder. Wird das Dämpfungsglied in der ersten Bewegungsrichtung verschoben, wirkt sich die Anordnung der ersten Federeinrichtung im Wesentlichen nicht auf die Haftreibung zwischen dem flexiblen Element und der Oberfläche der Welle aus. Wird jedoch das Dämpfungsglied zurück in der zweiten Bewegungsrichtung verschoben, so wird die Druckfeder komprimiert, wobei sich eine Reduzierung der Spannung des flexiblen Elements ergibt.

Die Komprimierung der Druckfeder ergibt sich ebenfalls aufgrund der Haftreibung zwischen der Welle und dem flexiblen Element. Beim Verschieben des Dämpfungsglieds in der zweiten Bewegungsrichtung zieht das Dämpfungsglied an dem flexiblen Element. Der Federteller wird hierüber in Richtung des Endabschnitts an der Endposition beim Verschieben in der ersten Bewegungsrichtung bewegt. Dabei ist das flexible Element in dem Bereich zwischen dem Federteller und dem Dämpfungsglied stärker gespannt als in dem Bereich zwischen dem Endabschnitt und dem Dämpfungsglied.

Eine Reduzierung der Spannung des flexiblen Elements resultiert ebenso in einer geringeren Haftreibung zwischen der Oberfläche der Welle und dem flexiblen Element, sodass das Verschieben in der zweiten Bewegungsrichtung einfacher erfolgt, wobei eine geringere Dämpfung bereitgestellt wird und eine geringere Bedienkraft zum Verschieben erforderlich ist. Der Aufbau einer solchen Dämpfungseinrichtung ist sehr einfach und ermöglicht auf zuverlässige Weise ein Verschieben des Dämpfungsglieds mit einer stärkeren Dämpfung in der ersten Bewegungsrichtung als in der zweiten Bewegungsrichtung.

Das Lagerelement weist zudem eine Führungsanordnung auf, entlang welcher das Dämpfungsglied bewegbar ist. In der Führungsanordnung können Führungselemente führbar gelagert sein, die mit dem Dämpfungsglied bzw. einem Gehäuse des Dämpfungsglieds verbunden sind. Die Bewegungsrichtungen des Dämpfungsglieds sind dadurch über die Führungsanordnung vorgegeben.

In weiteren Ausführungsformen kann die Dämpfungseinrichtung mindestens ein Einstellmittel aufweisen, welches dazu ausgebildet ist, die Vorspannung des flexiblen Elements zu verändern. Das Einstellmittel kann beispielsweise die Länge des flexiblen Elements zwischen dem Federteller im Bereich des Endabschnitts in der ersten Bewegungsrichtung und dem gegenüberliegenden Endabschnitt verändern. Über das mindestens eine Einstellmittel kann daher die Spannung des flexiblen Elements verändert werden. Eine Veränderung der Spannung des flexiblen Elements resultiert ebenso in einer Veränderung der Haftreibung zwischen dem flexiblen Element und der Oberfläche der Welle.

Das flexible Element kann ein Kunststoffseil sein. Als Kunststoffe können beispielsweise Polyamide oder Polyethylen oder Silikone verwendet werden. Bei dem Seil kann es sich beispielsweise um ein Nylonseil handeln.

Die Welle kann ferner aus einem Kunststoff bestehen und/oder eine reibungsreduzierende oder eine reibungserhöhende Beschichtung aufweisen. Die Beschichtung der Oberfläche der Welle bzw. das Material, aus welchem die Welle gebildet wird, sowie deren Beschaffenheit sind im Hinblick auf die erforderliche Bedienkraft zum Verschieben in Abhängigkeit der Ausbildung des flexiblen Elements zu wählen. Das flexible Element und die Welle sind Reibungspartner, deren Material nach Bedarf festgelegt werden muss. Beispielsweise kann die Welle eine Silikonbeschichtung aufweisen, um höhere Bremskräfte zu erzeugen und um eine stärkere Dämpfung bereitzustellen. Es können über die Beschichtung der Welle und des flexiblen Elements verschiedene haptisch wahrnehmbare Eindrücke für eine Bedienperson erreicht werden.

Die Welle kann in weiteren Ausführungen konisch ausgebildet und/oder das flexible Element an dem ersten Endabschnitt und an dem zweiten Endabschnitt auf verschiedenen Höhenniveaus befestigt sein, wobei die Höhenniveaus den Abstand zwischen einer Verschiebe- bzw. Kontakt/Auflagefläche für das Dämpfungsglied an dem Lagerelement und der Befestigungsstelle für das flexible Element angeben. In solchen Ausführungen, die bei allen hierin beschriebenen Varianten vorgesehen sein können, erhöht sich der Durchmesser der Wicklung des flexiblen Elements um die Welle beim Verschieben in der ersten Bewegungsrichtung. Dadurch wird das flexible Element stärker gespannt und die Reibung zwischen dem flexiblen Element und der Welle erhöht.

Die Einstellmittel können auch eine Stellschraube aufweisen, deren Verlagerung die Spannung der ersten Federeinrichtung bzw. der Druckfeder erhöht oder reduziert. Dadurch kann die Spannung des flexiblen Elements verändert werden. Die Stellschraube kann mit einem Elektromotor gekoppelt sein, sodass eine Veränderung der Spannung des flexiblen Elements über eine entfernte Steuerung durchgeführt werden kann.

Das Lagerelement kann mit einem feststehenden Bauteil verbunden oder Teil eines feststehenden Bauteils sein, wobei das Dämpfungsglied mit einem zu dem feststehenden Bauteil beweglichen Bauteil verbunden oder Teil eines zu dem feststehenden Bauteil beweglichen Bauteils sein kann. In alternativen Ausführungsformen ist das Dämpfungsglied mit einem feststehenden Bauteil verbunden oder Teil eines feststehenden Bauteils und des Lagerelementes mit einem zu dem feststehenden Bauteil beweglichen Bauteil verbunden oder Teil eines zu dem feststehenden Bauteil beweglichen Bauteils. Bauteile können beispielsweise Komponenten eines Fahrzeugarmaturenbretts oder andere Interieureinrichtungen sein. Beispielsweise können auch Klapptische, Handschuhfächer und weitere verschwenkbare Einrichtungen über derartige Dämpfungseinrichtungen gedämpft werden, wobei zusätzlich ein Freilauf vorgesehen ist. Der Freilauf wird bei den hierin beschriebenen Dämpfungseinrichtungen durch die geringere Dämpfung beim Verschieben des Dämpfungsglieds in der zweiten Bewegungsrichtung realisiert. Dies ermöglicht es, dass ein Handschuhfach mit einer erhöhten Bedienkraft geöffnet werden kann und das Schließen des Handschuhfaches mit einer geringeren Bedienkraft erfolgt.

Insbesondere sind die erforderlichen Bedienkräfte zum Verlagern bzw. Verschieben des Dämpfungsglieds, die sich aufgrund der ersten Federeinrichtung und der Haftreibung zwischen dem flexiblen Element und der Welle ergeben, im Hinblick auf die Verschiebe- und Verschwenkwege der Komponenten bzw. Bauteile sowie dem Gewicht dieser Komponenten und Bauteile auszulegen. In der Regel sollte die Dämpfungseinrichtung so ausgebildet sein, dass ohne eine äußere Einwirkung das Dämpfungsglied sich nicht selbstständig verlagern kann.

In weiteren Ausführungsformen kann die Welle mit einer zweiten Federeinrichtung gekoppelt sein, welche bei einer Rotation der Welle in einer ersten Richtung Energie speichert und bei einer Rotation der Welle in einer zweiten Richtung die gespeicherte Energie abgibt.

Dabei kann die zweite Federeinrichtung so angeordnet sein, dass Energie gespeichert wird, wenn das Dämpfungsglied in der ersten Bewegungsrichtung bewegt wird. Die zweite Federeinrichtung kann beispielsweise eine Spiralfeder aufweisen, deren erstes Ende mit der Welle und deren zweites Ende mit dem Gehäuse des Dämpfungsglieds verbunden ist. Die Spiralfeder speichert bei einer Rotation der Welle in einer ersten Richtung Energie und gibt bei einer Rotation der Welle in einer zweiten Richtung die gespeicherte Energie ab. Beim Verschieben in einer ersten Richtung wird zusätzlich die Spiralfeder des Dämpfungsglieds gespannt, sodass eine größere Kraft zum Verschieben des Dämpfungsglieds erforderlich ist. Die Rotation der Welle kann aufgrund der Haftreibung zwischen der Oberfläche der Welle und dem flexiblen Element erfolgen. In einer weiteren Ausführungsform weist die Welle ein Zahnrad oder ein mit der Welle gekoppeltes Ritzel auf, das in Eingriff mit einer Zahnstange entlang des Bewegungswegs des Dämpfungsglieds steht. Beispielsweise kann die Führungsanordnung einen Zahnstangenabschnitt aufweisen, mit dem das Ritzel oder das Zahnrad in Eingriff stehen. Dadurch wird die Welle beim Verfahren automatisch über das Zahnrad oder das Ritzel verdreht, sodass die Spiralfeder gespannt wird. Alternativ kann, wie vorstehend beschrieben, das Spannen der Spiralfeder auch über die Haftreibung zwischen der Welle und dem flexiblen Element erfolgen. Wird das Dämpfungsglied zurückbewegt, so wird die Spiralfeder entspannt und die gespeicherte Energie auf die Welle übertragen, sodass das Verschieben mit einer geringeren Dämpfung erfolgt. Zusätzlich wird dabei die Druckfeder der ersten Federeinrichtung komprimieret, sodass das Zurückfahren des Dämpfungsglieds in der zweiten Bewegungsrichtung noch weiter erleichtert wird. Beispielsweise ist es über eine erste Federeinrichtung und eine zweite Federeinrichtung möglich, einen Freilauf bereitzustellen, wobei in der zweiten Bewegungsrichtung im Wesentlichen keine Dämpfung mehr auftritt.

Bei Ausführungen mit einer zweiten Federeinrichtung und einer drehbar im Gehäuse gelagerten Welle kann auch eine selbstständige Verlagerung des Dämpfungsglieds ohne eine äußere Einwirkung erfolgen, wenn sich das Dämpfungsglied kurz vor dem Endabschnitt befindet. Das heißt, dass erst ab einem bestimmbaren und durch Auswahl der Bestandteile der Dämpfungseinrichtung festlegbaren Abstand zum Endabschnitt ein selbstständiges Verfahren erfolgt.

In Ausführungsformen ohne eine zweite Federeinrichtung ist die Welle in der Regel fest mit dem Gehäuse des Dämpfungsglieds verbunden, sodass die Welle nicht verdreht werden kann. Dementsprechend bestimmt sich die zum Verschieben des Dämpfungsglieds in der ersten Bewegungsrichtung erforderliche Bedienkraft über die Haftreibung zwischen dem flexiblen Element und der Oberfläche der Welle. Beim Verlagern des Dämpfungsglieds zurück in der zweiten Bewegungsrichtung erfolgt die geringere Dämpfung aufgrund der Entlastung des flexiblen Elements über die Druckfeder, welche komprimiert wird.

Dabei kann das Dämpfungsglied ein Gehäuse aufweisen, in dem die Welle so gelagert ist, dass die Längsachse der Welle orthogonal zu dem Bewegungsweg und zu dem flexiblen Element verläuft.

In weiteren Ausführungsformen kann der Bewegungsweg des Dämpfungsglieds mindestens abschnittsweise linear, gekrümmt, gebogen oder geknickt verlaufen. Alternativ dazu oder zusätzlich kann die Führungsanordnung mindestens abschnittsweisen einen linearen, gekrümmten, gebogenen oder geknickten Verlauf aufweisen und/oder das flexible Element mindestens abschnittsweise parallel zu dem Bewegungsweg des Dämpfungsglieds und/oder Führungsanordnung verlaufen, oder das flexible Element dem Bewegungsweg des Dämpfungsglied und/oder der Führungsanordnung mindestens einmal kreuzen.

Ändert sich der Abstand des flexiblen Elements zu der Führungsbahn so wird das flexible Element über die Führung des Dämpfungsglieds in der Führungsanordnung weiter gespannt, wenn der Abstand zu der Führungsanordnung und dem flexiblen Element größer wird, wodurch sich die Haftreibung ebenfalls erhöht. In diesen Bereichen ist das Verschieben des Dämpfungsglieds schwergängiger als in Bereichen, wo der Abstand der Führungsanordnung zu dem flexiblen Element geringer oder nicht vorhanden ist. Beispielsweise kann bei einer welligen Ausbildung der Führungsanordnung die Haftreibung abwechselnd erhöht und wieder erniedrigt werden. In weiteren Ausführungsformen liegen die Führungsanordnung und das flexible Element an einem der Endabschnitte in einer Ebene. An dem gegenüberliegenden Endabschnitt können die Führungsanordnung und das flexible Element versetzt zueinander angeordnet sein, sodass beim Verschieben des Dämpfungsglieds entlang des Bewegungswegs die Haftreibung zusätzlich erhöht wird, wodurch ein schwergängiges Verschieben erreicht wird.

Weitere Vorteile, Merkmale sowie Ausgestaltungsmöglichkeiten ergeben sich aus der nachfolgenden Figurenbeschreibung von nicht einschränkend zu verstehenden Ausführungsbeispielen.

In den Zeichnungen zeigt:
- Fig. 1: eine perspektivische Darstellung einer Dämpfungseinrichtung in einer Ausführungsform;
- Fig. 2: eine schematische Draufsicht auf die Dämpfungseinrichtung der Ausführungsform von Fig. 1;
- Fig. 3: eine schematische Darstellung der Dämpfungseinrichtung der Ausführungsform von Fig. 1 von unten;
- Fig. 4: eine schematische Seitenansicht der Dämpfungseinrichtung der Ausführungsform von Fig. 1;
- Fig. 5: eine schematische Schnittansicht der Dämpfungseinrichtung der Ausführungsform von Fig. 1;
- Fig. 6: ein Kraft-Weg-Diagramm; und
- Fig. 7a-d: verschiedene Ausbildungen der Anordnung von Führungsanordnungen und flexiblen Elementen.

In den Figuren mit gleichen Bezugszeichen versehene Teile entsprechend im Wesentlichen einander, sofern nichts anderes angegeben ist. Ferner wird darauf verzichtet Bestandteile zu beschreiben, welche nicht wesentlich zum Verständnis der hierin offenbarten technischen Lehre sind.

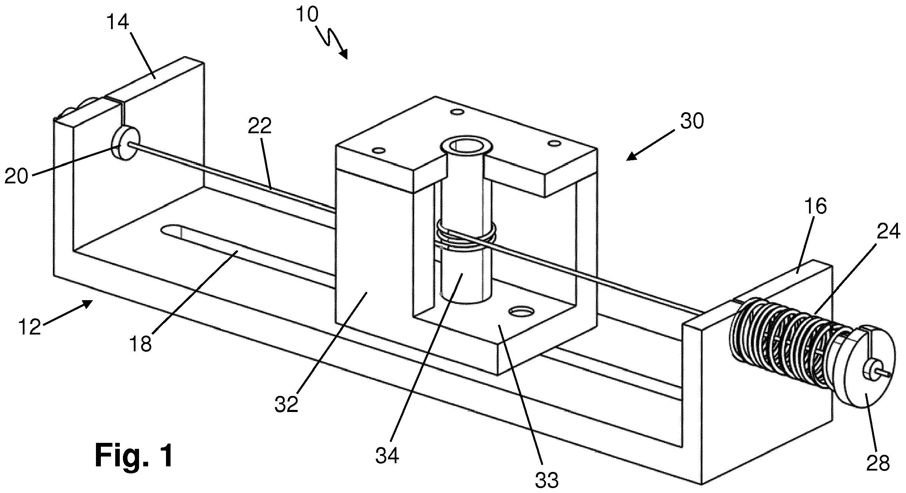

Die Fig. 1 bis 5 zeigen verschiedene Darstellungen und Komponenten einer Dämpfungseinrichtung 10 in einer beispielhaften Ausführungsform. Fig. 1 zeigt eine perspektivische Darstellung einer Dämpfungseinrichtung 10. Die Dämpfungseinrichtung 10 weist ein Dämpfungsglied 30 und ein Lagerelement 12 auf. Das Lagerelement 12 weist zwei gegenüberliegende Endabschnitte 14 und 16 auf. Die Endabschnitte 14 und 16 weisen jeweils eine Aufnahmeöffnung für ein flexibles Element 22 auf. Das flexible Element 22 ist beispielsweise ein Nylonseil. Über ein Halteelement 20 wird das flexible Element 22 an dem Endabschnitt 14 gehalten. An dem Endabschnitt 16 ist das flexible Element 22 hinausgeführt und über ein Einstellmittel 28 mit einem Federteller befestigt. An dem Endabschnitt 16 ist eine Druckfeder 24 angeordnet, welche das Einstellmittel 28 mit dem Federteller von dem Endabschnitt 16 wegdrückt. Bei den in den Figuren gezeigten Einstellmitteln 26 und 28 wird in erster Linie das flexible Element 22 fixiert. Zusätzlich kann über die Einstellmittel 26 und 28 eine Veränderung der Spannung des flexiblen Elements 22 und/oder für das Einstellmittel 28 eine Änderung der Komprimierung der Druckfeder 24 durchgeführt werden.

Das Lagerelement 12 weist eine Führungsanordnung mit einer Führung 18 auf. Das Dämpfungsglied 30 ist entlang dieser Führung 18 verschiebbar. Das Dämpfungsglied 30 weist ein Gehäuse 32 und eine Welle 34 auf. Das flexible Element 22 ist mindestens einmal um die Welle 34 herumgewickelt. Die Welle 34 ist fest mit dem Gehäuse 32 des Dämpfungsglieds 30 verbunden, wobei ein unteres Ende der Welle 34 an einem Boden 33 und ein oberes Ende der Welle 34 an einem gegenüberliegenden Deckenabschnitt (nicht bezeichnet) angeordnet ist. Ein Verdrehen der Welle 34 ist daher bei der in Fig. 1 gezeigten Ausführung nicht möglich.

Die erforderliche Bedienkraft und damit auch die Dämpfung der Dämpfungseinrichtung 10 ergeben sich aus der Haftreibung zwischen dem flexiblen Element 22 und der Oberfläche der Welle 34. In Abhängigkeit der Anzahl der Wicklungen ergeben sich verschiedene Reibungswerte. Je öfter das flexible Element 22 um die Welle 34 herumgewickelt ist, desto größer ist die Haftreibung zwischen dem flexiblen Element 22 und der Welle 34. Eine größere Haftreibung resultiert stets in einer größeren Dämpfung.

Wird das Dämpfungsglied 30 von dem ersten Endabschnitt 14 in der ersten Bewegungsrichtung zu dem zweiten Endabschnitt 16 bewegt, erfolgt eine Dämpfung in Abhängigkeit der Haftreibung zwischen dem flexiblen Element 22 und der Oberfläche der Welle 34. Wird das Dämpfungsglied 30 von dem zweiten Endabschnitt 16 in der zweiten Bewegungsrichtung zurück zum ersten Endabschnitt 14 bewegt, wird die Druckfeder 24 komprimiert, wodurch die Spannung des flexiblen Elements 22 abnimmt. Die Komprimierung der Druckfeder 24 ergibt sich ebenfalls aufgrund der Haftreibung zwischen der Welle 34 und dem flexiblen Element 22. Beim Verschieben des Dämpfungsglieds 30 in der zweiten Bewegungsrichtung zieht das Dämpfungsglied 30 an dem flexiblen Element 22. Das Einstellmittel 28 mit dem Federteller wird hierüber in Richtung des Endabschnitts 16 bewegt. Dabei ist das flexible Element 22 in dem Bereich zwischen dem Einstellmittel 28 und dem Dämpfungsglied 30 stärker gespannt als in dem Bereich zwischen dem Endabschnitt 14 und dem Dämpfungsglied 30. Eine geringere Spannung reduziert die Haftreibung zwischen der Oberfläche der Welle 34 und dem flexiblen Element 22, sodass das Verschieben des Dämpfungsglieds 30 von dem Endabschnitt 16 zu dem Endabschnitt 14 eine geringere Bedienkraft erfordert und daher weniger gedämpft wird als in der ersten Bewegungsrichtung.

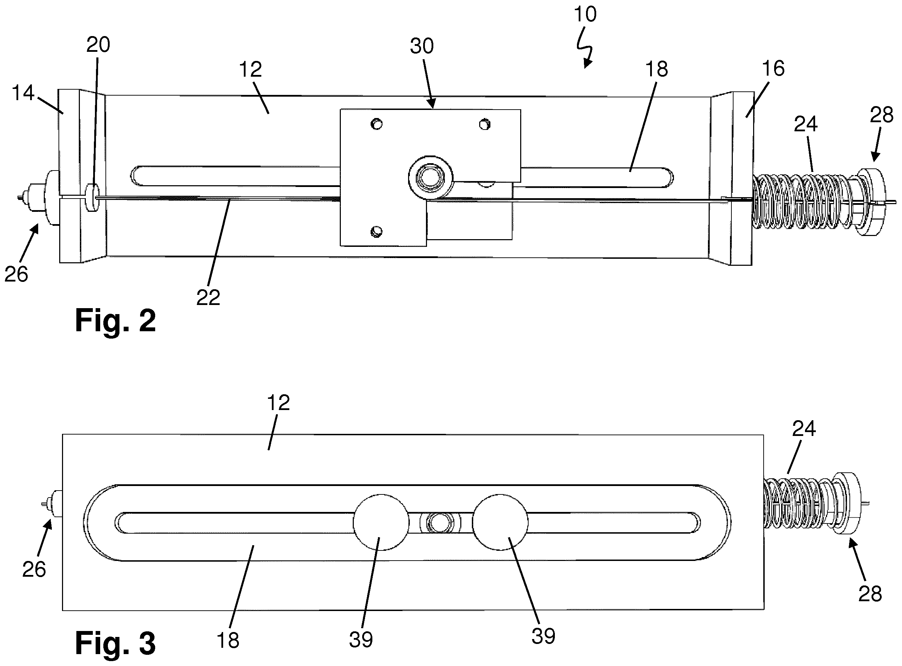

Fig. 2 zeigt eine schematische Draufsicht auf die Dämpfungseinrichtung 10 der Ausführungsform von Fig. 1. In Fig. 2 ist ein Einstellmittel 26 gezeigt, dass im Endabschnitt 14 dem Halteelement 20 gegenüberliegend angeordnet ist. Wie vorstehend bereits ausgeführt, kann das Einstellmittel 26 dazu vorgesehen sein, die Spannung des flexiblen Elements 22 zu verändern oder lediglich dazu dienen, dass flexible Element 22 im Bereich des Endabschnitts 14 festzuhalten. Ferner kann das Einstellmittel 26 als Gegenspieler für das Einstellmittel 28 dienen.

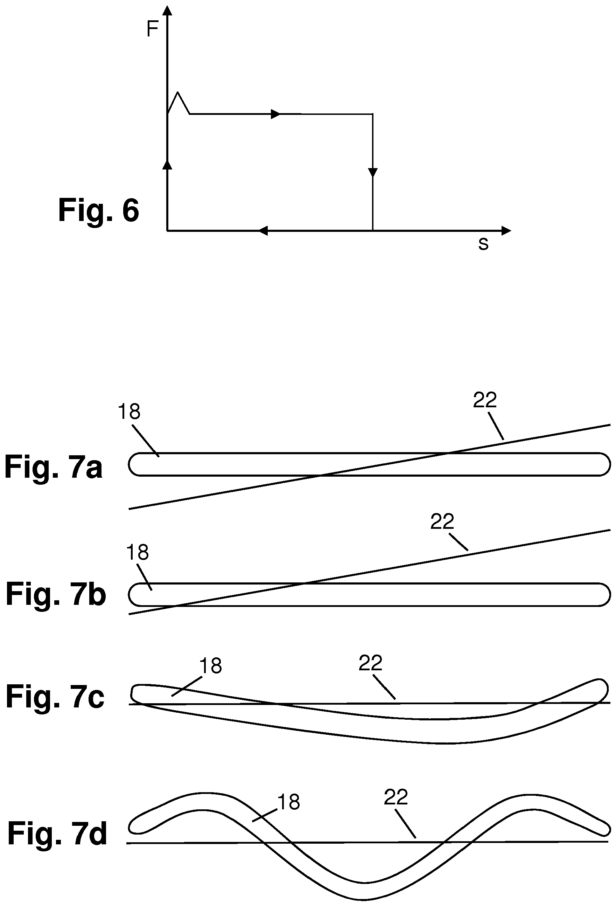

In Fig. 2 ist die Anordnung des flexiblen Elements 22 zu der Führung 18 dargestellt. Das Dämpfungsglied 30 kann entlang der Führung 18 verschoben werden. Das flexible Element 22 verläuft dabei beanstandet und parallel zu der Führung 18. Ändert sich die Ausrichtung der Führung 18 zu dem flexiblen Element 22, so können verschiedene Dämpfungen auch während dem Verlagern des Dämpfungsglieds 30 in einer der Bewegungsrichtungen erreicht werden. Verschiedene Ausbildungsmöglichkeiten sind in den Fig. 7a-d gezeigt.

Fig. 3 zeigt eine schematische Draufstellung der Dämpfungseinrichtung 10 der Ausführungsform von Fig. 1 von unten. In dem Boden 33 des Dämpfungsglieds 30 sind Führungsstifte 39 eingesetzt, die einen tellerartigen unteren Abschnitt aufweisen. Über diesen Abschnitt sind die Führungsstifte 39 in der Führung 18 verschiebbar gelagert. Die Führungsstifte 39 können beispielsweise über ein Gewinde in den Boden 33 des Dämpfungsglieds 30 eingeschraubt sein. Die Führungsstifte 39 sind dabei so ausgebildet, dass sie keine Reibung erzeugen oder das Verschieben des Dämpfungsglieds 30 entlang der Führung 18 behindern.

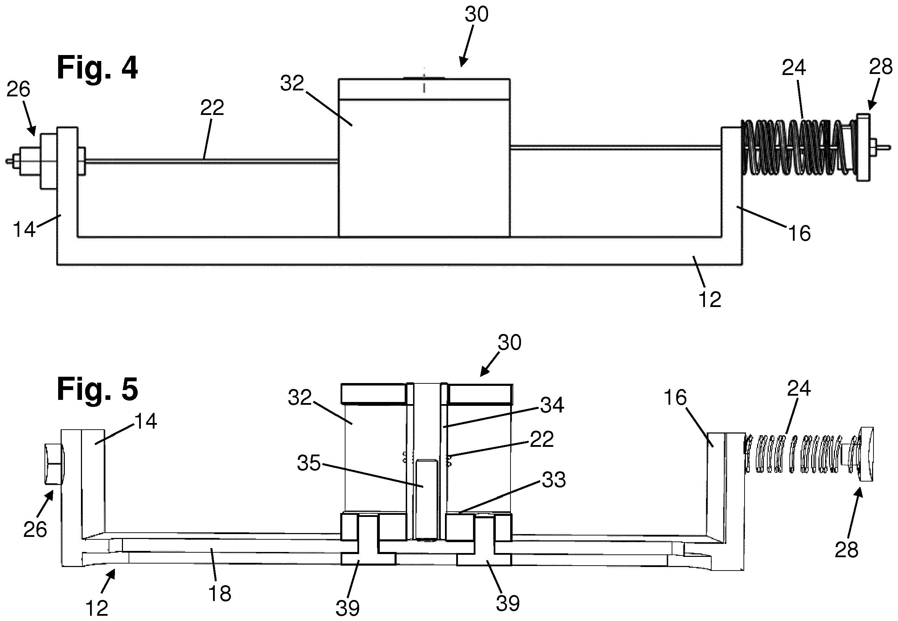

Fig. 4 zeigt eine schematische Seitenansicht der Dämpfungseinrichtung der Ausführungsformen von Fig. 1 und Fig. 5 eine schematische Schnittansicht der Dämpfungseinrichtung 10 der Ausführungsform von Fig. 1.

In Fig. 5 ist ein Lagerbolzen 35 dargestellt, der fest mit dem Boden 33 des Gehäuses 32 des Dämpfungsglieds 30 verbunden ist. Die Welle 34 kann über den Lagerbolzen 35 fest mit dem Gehäuse 32 verbunden werden. Beispielsweise erfolgt ein Verkleben, Verschweißen oder Verschrauben der Welle 34 mit dem Lagerbolzen 35. Ferner können auch Vorsprünge, Führungen oder anderweitige Mittel vorgesehen sein, die die Position der Welle 34 zu dem Lagerbolzen 35 festlegen.

Wie durch Fig. 5 ersichtlich, kann das Gehäuse 32 des Dämpfungsglieds 30 über die Führungsstifte 39 entlang der Führung 18 verlagert werden. Um auch eine Verlagerung des Dämpfungsglieds 30 bei wellenartigen Führungen 18 (siehe Fig. 7 d) zu ermöglichen oder zu unterstützen, können die Führungsstifte 39 auch drehbar in den entsprechenden Öffnungen im Boden 33 angeordnet sein. In solchen Ausführungen sollten die Führungsstifte 39 jedoch zusätzliche Mittel aufweisen, die ein Abheben des Bodens 33 von den Führungsstiften 39 oder ein Herausbewegen der Führungsstifte 39 aus dem Boden 33 verhindern. Dies kann beispielsweise analog zu einer Nietverbindung erfolgen, wobei die Führungsstifte 39 einen tellerartigen Abschnitt aufweisen, der auf dem Boden 33 aufliegt.

Fig. 6 zeigt ein Kraft-Weg-Diagramm für die in den Figuren gezeigte Dämpfungseinrichtung 10. Beim Verschieben des Dämpfungsglieds 30 entlang dem Weg s muss eine bestimmte Bedienkraft F aufgebracht werden, um das Dämpfungsglied 30 in Bewegung zu setzen und die Dämpfung aufgrund der Haftreibung zwischen der Welle 34 und dem flexiblen Element 22 zu überwinden. Dabei ist zu Beginn des Verschiebens des Dämpfungsglieds 30 kurzzeitig ein erhöhter Kraftaufwand notwendig, der höher ist als für das weitere Verschieben entlang des Weges s. Nach der Initiierung des Verschiebens der Dämpfungsglieds 30 entlang dem Weg s bleibt die erforderliche Bedienkraft zum Verschieben und die Dämpfung im Wesentlichen konstant. Wird das Dämpfungsglied 30 zurück in seine Ausgangsposition verschoben, so ist eine deutlich geringere Bedienkraft erforderlich, da die Dämpfung durch die Komprimierung der Druckfeder 24 verringert wird. Die Komprimierung der Druckfeder 24 resultiert insbesondere im Bereich zwischen dem Endabschnitt 14 und dem Dämpfungsglied 30 in einer geringeren Spannung des flexiblen Elements 22, sodass auch die Haftreibung zwischen dem flexiblen Element 22 und der Oberfläche der Welle 34 abnimmt. Die Darstellung von Fig. 6 ist rein schematisch. So ist dem letzten Abschnitt beim Zurückschieben des Dämpfungsglieds 30 eine geringere Kraft erforderlich, wobei der Kraftaufwand nicht 0 ist. Die erforderliche Kraft ist deutlich geringer als die Bedienkraft zum Verschieben in positiver Richtung entlang des Wegs s nach rechts. Ebenso ist die Darstellung der Kraftspitze beim Start des Verschiebevorgangs schematisch dargestellt. Die Kraftverläufe können dabei auch anders als in Fig. 6 dargestellt nicht linear sein. Wie sich durch die Darstellung des Kraft-Weg-Diagramms von Fig. 6 zeigt, ist die Bremskraft, die über die Dämpfungseinrichtung 10 bereitgestellt wird, über den Weg s im Wesentlichen konstant. Dies kann beispielsweise bei Einrichtungen mit verschwenkbar und zu dämpfenden Komponenten vorteilhaft sein, wenn beispielsweise das Öffnen einer verschwenkbaren Klappe im Wesentlichen konstant erfolgen soll.

Die Fig. 7a-d zeigen verschiedene Ausbildungen der Anordnung von Führungsanordnungen und flexiblen Elementen 22.

Fig. 7a zeigt eine gradlinig verlaufende Führung 18, wobei das flexible Element 22 quer über den Weg der Führung 18 gespannt ist. Wird ein Dämpfungsglied 30 entlang des flexiblen Elements 22 von einer ersten Position in eine zweite Position verschoben, so nimmt die erforderliche Bedienkraft und damit auch die Bremskraft des Dämpfungsglieds 30 ab und steigt im letzten Abschnitt wieder an.

Bei der Darstellung von Fig. 7b ist eine Anordnung gezeigt, wobei die Führung 18 geradlinig verläuft und das flexible Element 22 in einem ersten Abschnitt im Bereich der Führung 18 angeordnet ist und in einem zweiten Abschnitt beanstandet zu der Führung 18. Hierbei nimmt die erforderliche Bedienkraft und damit auch die Bremskraft beim Verschieben des Dämpfungsglieds 30 entlang des flexiblen Elements 22 zusätzlich zu der Haftreibung zwischen der Welle 34 und dem flexiblen Element 22 zu. In alternativen Ausführungsformen kann auch die erforderliche Bedienkraft aufgrund der gezeigten Anordnung abnehmen. Entsprechend ist dabei die Ausgangposition des Dämpfungsglieds 30 an dem flexiblen Element 22 zu bestimmen. Die Ausgangsposition des Dämpfungsglieds 30 kann sich dabei in der Darstellung von Fig. 7b entweder links oder rechts befinden.

Fig. 7c zeigt eine Ausführung mit einer gekrümmt verlaufenden Führung 18. Dabei nimmt die erforderliche Bedienkraft und die Dämpfung beim Verschieben des Dämpfungsglieds 30 entlang des flexiblen Elements 22 von links nach rechts zusätzlich zu der ohnehin schon vorherrschenden Haftreibung zwischen der Oberfläche der Welle 34 und dem flexiblen Element 22 zu, da die höhere Spannung des flexiblen Elements 22 automatisch in einer höheren Haftreibung resultiert. Im gegenüberliegenden Endabschnitt wird der Abstand zwischen der Führung 18 und dem flexiblen Element 22 wieder verringert, sodass die Spannung auf das flexible Element 22 abnimmt und damit die Haftreibung ebenfalls wieder reduziert wird.

Fig. 7d zeigt eine weitere Ausführung, wobei die Führung 18 einen bogenförmigen Verlauf aufweist und das flexible Element 22 die Führung 18 zweimal kreuzt. Auch bei der in Fig. 7d gezeigten Ausführung nimmt der Abstand zwischen dem flexiblen Element 22 und der Führung 18 zu und wieder ab, sodass die Spannung des flexiblen Elements 22 entlang dem Verschiebeweg variiert. Dementsprechend variiert die Haftreibung, sodass erhöhte Bedienkräfte und damit auch resultierend erhöhte Bremskräfte erforderlich sind bzw. erzeugt werden.

Bei den in den Fig. 7a bis d gezeigten Ausführungsformen wird die Haftreibung zwischen dem flexiblen Element 22 und der Welle 34 zusätzlich erhöht oder verringert, je nachdem ob der Abstand zwischen der Führung 18 und dem flexiblen Element 22 zu oder abnimmt. Dabei ändert sich ebenso die Position der Welle 34 zu der Führung 18, woraus sich die höhere Spannung des flexiblen Elements 22 ergibt, welches an festen Positionen in den Endabschnitten 14 und 16 angeordnet ist. Ist der Abstand des flexiblen Elements 22 mit der Welle 34 zu der Führung 18 größer, so steht das flexible Element 22 unter einer erhöhten Spannung, wodurch auch die Haftreibung zwischen dem flexiblen Element 22 und der Welle 34 erhöht wird.

Durch die vorstehend genannten Ausführungsformen ist es möglich, in Abhängigkeit der gewünschten Dämpfungs- und Bremseigenschaften von verschwenkbar oder verschiebbaren Komponenten ein entsprechendes Dämpfen bzw. Bremsen zu erreichen. Insbesondere ist über die vorstehend genannten Ausführungsformen ein Freilauf bereitgestellt, der eine Verlagerung zurück in eine Ausgangsposition mit einer geringeren Bedienkraft bereitstellt, als beispielsweise das Öffnen oder Herausziehen aus einer Ausgangsposition.

### Bezugszeichenliste

- 10: Dämpfungseinrichtung
- 12: Lagerelement
- 14: Endabschnitt
- 16: Endabschnitt
- 18: Führung
- 20: Halteelement
- 22: flexibles Element
- 24: Feder
- 26: Einstellmittel
- 28: Einstellmittel
- 30: Dämpfungsglied
- 32: Gehäuse
- 33: Boden
- 34: Welle
- 35: Lagerbolzen
- 39: Führungsstift

## Patentansprüche

1. Dämpfungseinrichtung (10) mit einem Lagerelement (12) und einem relativ zu dem Lagerelement (12) bewegbaren Dämpfungsglied (30), wobei das Dämpfungsglied (30) in einer ersten Bewegungsrichtung stärker gedämpft wird als in einer zweiten Bewegungsrichtung, wobei das Lagerelement (12) ein flexibles Element (22) aufweist, das zwischen einem ersten Endabschnitt (14) und einem zweiten Endabschnitt (16) geführt ist und der Bereich zwischen dem ersten Endabschnitt (14) und dem zweiten Endabschnitt (16) den Bewegungsweg des Dämpfungsglieds (30) definiert, wobei das Dämpfungsglied (30) mindestens eine Welle (34) aufweist und das flexible Element (22) mindestens einmal um die Welle (34) herum geführt ist, und wobei das flexible Element (22) über eine erste Federeinrichtung an einem der Endabschnitte (14; 16) vorgespannt ist und das Lagerelement (12) eine sich entlang des Lagerelements (12) erstreckende Führungsanordnung aufweist, entlang welcher das Dämpfungsglied (30) bewegbar ist.

2. Dämpfungseinrichtung (10) nach Anspruch 1, aufweisend mindestens ein Einstellmittel (26; 28), welches dazu ausgebildet ist, die Vorspannung des flexiblen Elements (22) zu verändern.

3. Dämpfungseinrichtung (10) nach Anspruch 1 oder 2, wobei das flexible Element (22) ein Kunststoffseil ist.

4. Dämpfungseinrichtung (10) nach einem der Ansprüche 1 bis 3, wobei die Welle (34) aus einem Kunststoff besteht und/oder eine reibungsreduzierende oder reibungserhöhende Beschichtung aufweist.

5. Dämpfungseinrichtung (10) nach einem der Ansprüche 1 bis 4, wobei
- das Lagerelement (12) mit einem feststehenden Bauteil verbunden oder Teil eines feststehenden Bauteils und das Dämpfungsglied (30) mit einem zu dem feststehenden Bauteil beweglichen Bauteil verbunden oder Teil eines zu dem feststehenden Bauteil beweglichen Bauteils ist, oder
- das Dämpfungsglied (30) mit einem feststehenden Bauteil verbunden oder Teil eines feststehenden Bauteils und das Lagerelement (12) mit einem zu dem feststehenden Bauteil beweglichen Bauteil verbunden oder Teil eines zu dem feststehenden Bauteil beweglichen Bauteils ist.

6. Dämpfungseinrichtung (10) nach einem der Ansprüche 1 bis 5, wobei die Welle (34) mit einer zweiten Federeinrichtung gekoppelt ist, welche bei einer Rotation der Welle (34) in einer ersten Richtung Energie speichert und bei einer Rotation der Welle (34) in einer zweiten Richtung die gespeicherte Energie abgibt.

7. Dämpfungseinrichtung (10) nach Anspruch 6, wobei die zweite Federeinrichtung so angeordnet ist, dass Energie gespeichert wird, wenn das Dämpfungsglied (30) in der ersten Bewegungsrichtung bewegt wird.

8. Dämpfungseinrichtung (10) nach einem der Ansprüche 1 bis 7, wobei das Dämpfungsglied (30) ein Gehäuse (32) aufweist, in dem die Welle (34) so gelagert ist, dass die Längsachse der Welle (34) orthogonal zu dem Bewegungsweg und zu dem flexiblen Element (22) verläuft.

9. Dämpfungseinrichtung (10) nach einem der Ansprüche 1 bis 8, wobei
- der Bewegungsweg des Dämpfungsglieds (30) mindestens abschnittsweise linear, gekrümmt, gebogen oder geknickt verläuft, und/oder
- die Führungsanordnung mindestens abschnittsweise einen linearen, gekrümmten, gebogenen oder geknickten Verlauf aufweist, und/oder
- das flexible Element (22) mindestens abschnittsweise parallel zu dem Bewegungsweg des Dämpfungsglieds (30) und/oder der Führungsanordnung verläuft, oder das flexible Element (22) den Bewegungsweg des Dämpfungsglieds (30) und/oder der Führungsanordnung mindestens einmal kreuzt.

## Claims

1. Damping device (10) with a mounting element (12) and a damping element (30) movable relative to the mounting element (12), wherein the damping element (30) is more strongly damped in a first movement direction than in a second movement direction, wherein the mounting element (12) comprises a flexible element (22), which is guided between a first end section (14) and a second end section (16), and the region between the first end section (14) and the second end section (16) defines the movement path of the damping element (30), wherein the damping element (30) comprises at least one shaft (34) and the flexible element (22) is guided at least once around the shaft (34), and wherein the flexible element (22) is biased by way of a first spring device at one of the end sections (14; 16) and the mounting element (12) comprises a guide arrangement, which extends along the mounting element (12) and along which the damping element (30) is movable.

2. Damping device (10) according to claim 1, comprising at least one setting means (26; 28) constructed for the purpose of varying the bias of the flexible element (22).

3. Damping device (10) according to claim 1 or 2, wherein the flexible element (22) is a plastics material cable.

4. Damping device (10) according to any one of claims 1 to 3, wherein the shaft (34) consists of a plastics material and/or has a friction-reducing or friction-increasing coating.

5. Damping device (10) according to any one of claims 1 to 4, wherein
- the mounting element (12) is connected with a stationary component or is part of a stationary component and the damping element (30) is connected with a component movable relative to the stationary component or is part of a component movable relative to the stationary component, or
- the damping element (30) is connected with a stationary component or is part of a stationary component and the mounting element (12) is connected with a component movable relative to the stationary component or is part of a component movable relative to the stationary component.

6. Damping device (10) according to any one of claims 1 to 5, wherein the shaft (34) is coupled with a second spring device which on rotation of the shaft (34) in a first direction stores energy and on rotation of the shaft (34) in a second direction delivers the stored energy.

7. Damping device (10) according to claim 6, wherein the second spring device is so arranged that energy is stored when the damping element (30) is moved in the first movement direction.

8. Damping device (10) according to any one of claims 1 to 7, wherein the damping element (30) comprises a housing (32) in which the shaft (34) is so mounted that the longitudinal axis of the shaft (34) extends orthogonally to the movement path and to the flexible element (22).

9. Damping device (10) according to any one of claims 1 to 8, wherein
- the movement path of the damping element (30) extends in a linear, curved, bent or kinked manner at least in a section and/or
- the guide arrangement has a course which is linear, curved, bent or kinked at least in a section and/or
- the flexible element (22) extends at least in a section parallel to the movement path of the damping element (30) and/or the guide arrangement or the flexible element (22) crosses the movement path of the damping element (30) and/or the guide arrangement at least once.

## Revendications

1. Dispositif d'amortissement (10) avec un élément de palier (12) et un organe d'amortissement (30) pouvant être déplacé par rapport à l'élément de palier (12), dans lequel l'organe d'amortissement (30) est amorti plus fortement dans une première direction de déplacement que dans une deuxième direction de déplacement, dans lequel l'élément de palier (12) présente un élément flexible (22), qui est guidé entre une première section d'extrémité (14) et une deuxième section d'extrémité (16), et la zone entre la première section d'extrémité (14) et la deuxième section d'extrémité (16) définit le trajet de déplacement de l'organe d'amortissement (30), dans lequel l'organe d'amortissement (30) présente au moins un arbre (34) et l'élément flexible (22) est guidé au moins une fois tout autour de l'arbre (34), et dans lequel l'élément flexible (22) est précontraint au niveau d'une des sections d'extrémité (14 ; 16) par l'intermédiaire d'un premier dispositif à ressort et l'élément de palier (12) présente un ensemble de guidage s'étendant le long de l'élément de palier (12), le long duquel l'organe d'amortissement (30) peut être déplacé.

2. Dispositif d'amortissement (10) selon la revendication 1, présentant au moins un moyen de réglage (26 ; 28), qui est réalisé pour modifier la précontrainte de l'élément flexible (22).

3. Dispositif d'amortissement (10) selon la revendication 1 ou 2, dans lequel l'élément flexible (22) est un câble en matière plastique.

4. Dispositif d'amortissement (10) selon l'une quelconque des revendications 1 à 3, dans lequel l'arbre (34) est constitué d'une matière plastique et/ou présente un revêtement de réduction de frottement ou d'augmentation de frottement.

5. Dispositif d'amortissement (10) selon l'une quelconque des revendications 1 à 4, dans lequel
- l'élément de palier (12) est relié à un composant immobile ou fait partie d'un composant immobile et l'organe d'amortissement (30) est relié à un composant mobile par rapport au composant immobile ou fait partie d'un composant mobile par rapport au composant immobile, ou
- l'organe d'amortissement (30) est relié à un composant immobile ou fait partie d'un composant immobile et l'élément de palier (12) est relié à un composant mobile par rapport au composant immobile ou fait partie d'un composant mobile par rapport au composant immobile.

6. Dispositif d'amortissement (10) selon l'une quelconque des revendications 1 à 5, dans lequel l'arbre (34) est couplé à un deuxième dispositif à ressort, lequel stocke de l'énergie lors d'une rotation de l'arbre (34) dans une première direction et fournit l'énergie stockée lors d'une rotation de l'arbre (34) dans une deuxième direction.

7. Dispositif d'amortissement (10) selon la revendication 6, dans lequel le deuxième dispositif à ressort est disposé de telle sorte que de l'énergie est stockée quand l'organe d'amortissement (30) est déplacé dans la première direction de déplacement.

8. Dispositif d'amortissement (10) selon l'une quelconque des revendications 1 à 7, dans lequel l'organe d'amortissement (30) présente un boîtier (32), dans lequel l'arbre (34) est monté de telle sorte que l'axe longitudinal de l'arbre (34) s'étend orthogonalement au trajet de déplacement et orthogonalement à l'élément flexible (22).

9. Dispositif d'amortissement (10) selon l'une quelconque des revendications 1 à 8, dans lequel
- le trajet de déplacement de l'organe d'amortissement (30) s'étend au moins par endroits de manière linéaire, incurvée, cintrée ou pliée, et/ou
- l'ensemble de guidage présente au moins par endroits un profil linéaire, incurvé, cintré ou plié, et/ou
- l'élément flexible (22) s'étend au moins par endroits parallèlement au trajet de déplacement de l'organe d'amortissement (30) et/ou parallèlement à l'ensemble de guidage, ou l'élément flexible (22) croise au moins une fois le trajet de déplacement de l'organe d'amortissement (30) et/ou de l'ensemble de guidage.
